# EUROPÄISCHE PATENTANMELDUNG

(11) **EP 1 116 611 A1**
(43) Veröffentlichungstag der Anmeldung: **18.07.2001**
(21) Anmeldenummer: 00100853.1
(22) Anmeldetag: 17.01.2000
(51) Int. Cl.: B60H 1/00

(54) **Verfahren zum Regeln einer Klimaanlage und Klimaanlage für ein Kraftfahrzeug**

(71) Anmelder: SIEMENS AKTIENGESELLSCHAFT, 80333 München (DE)
(72) Erfinder: Röhrl, Thomas, 93092 Barbing (DE); Hiebl, Hans, 93170 Bernhardswald (DE)

(57) **Zusammenfassung**

Die Innenraumtemperatur (Tᵢ) eines Kraftfahrzeugs wird mit Hilfe einer vorgegebenen Regelkurve (18-21) geregelt. Die Regelkurve ist dabei abhängig von der Zeit oder dem Datum, wodurch tageszeitliche oder jahreszeitliche Einflüsse auf das thermische Behaglichkeitsempfinden berücksichtigt werden. Manuelle Änderungen (ΔTₛₒₗₗ) der Innenraumtemperatur Tᵢ führen zu einem Anpassen der Zielregelkurve an die Änderungen.

## Beschreibung

Die Erfindung betrifft ein Verfahren zum Regeln der Lufttemperatur eines Innenraums eines Kraftfahrzeugs durch eine Klimaanlage und eine entsprechenden Klimaanlage.

Die meisten Kraftfahrzeuge sind heutzutage mit einer Klimaanlage ausgestattet, durch die die Luft innerhalb des Fahrgastraumes auf einen gewünschten Temperaturwert gebracht und dort gehalten wird. Auch wenn Heizleistung, Kälteleistung, Luftmenge und Luftverteilung im Innenraum manuell eingestellt werden können, so ist es doch das Ziel, automatisch geregelte Klimaanlagen einzusetzen, durch die den Fahrzeuginsassen gute, thermische Behaglichkeitsempfinden geboten werden, ohne viel in die Steuerung der Klimaanlage manuell einzugreifen.

Bei einer bekannten Klimaanlage (WO 94/18021) wird die thermische Wärmemenge, die von außen in das Fahrzeug beispielsweise durch Sonnenstrahlung eingeführt wird, bei der Einstellung der Innenraumtemperatur berücksichtigt. Dadurch wird das thermische Behaglichkeitsempfinden verbessert, ohne dass der Benutzer bei starker Sonneneinstrahlung die Einstellungen für die Lufttemperatur im Innenraum manuell ändern muss.

Es gibt noch viele Einflüsse auf das thermische Behaglichkeitsempfinden, die bei herkömmlichen Klimaanlagen nicht berücksichtigt werden. So ist es bekannt, dass das thermische Behaglichkeitsempfinden sowohl von quantitativ als auch von nicht quantitativ erfassbaren Größen abhängt, die entweder den physikalischen oder den physischen oder keinem von beiden Bereichen zugeordnet werden können (Weible, Kern: Steuerungs- und Regelungssysteme für Heizungs- und Klimaanlagen in Kraftfahrzeugen, VDI-Berichte Nr. 515, 1984, S. 167 ff.). Da die physikalischen Bedingungen wie Lufttemperatur, Luftfeuchtigkeit, Luftdruck, Luftzusammensetzung oder die Sonneneinstrahlung gut gemessen werden können, können diese auch bei der Klimatisierung berücksichtigt werden. Allerdings werden bisher physiologische Bedingungen, wie Alter, Geschlecht, Konstitution, körperliche Verfassung oder Nahrungsaufnahme, sowie intermediäre Bedingungen, wie Kleidung, Tages- und Jahresrhythmen, Tätigkeitsgrad oder Raumbesetzung, nicht berücksichtigt.

Der Erfindung liegt die Aufgabe zugrunde, eine Klimaanlage zu schaffen, die Häufigkeit der manuellen Eingriffe auf die Klimaanlage zu reduzieren und damit weniger manuelle Änderungen von automatischen Einstellungen vorzunehmen.

Diese Aufgabe wird erfindungsgemäß durch ein Verfahren zum Regeln der Innenraumtemperatur gemäß Merkmale von Patentanspruch 1, ein Verfahren mit den Merkmalen von Patentanspruch 8 und durch eine Klimaanlage gemäß der Merkmale von Patentanspruch 6 gelöst.

Dabei wird die in den Innenraum einströmende Luftmenge oder die Lufttemperatur in dem Innenraum abhängig von einer Zeitinformation geregelt. Dies hat den Vorteil, dass Einflüsse auf das thermische Behaglichkeitsempfinden, die nicht direkt messbar sind, bei der Klimatisierung des Innenraums berücksichtigt werden können. Somit können beispielsweise Tagesrhythmen (circadiane Rhythmen) oder Jahreszeitrhythmen in dem Befinden der thermischen Behaglichkeit berücksichtigt werden. Ebenso kann das Alter eines Benutzers berücksichtigt werden. Dies hat den Vorteil, ein Benutzer während der Fahrt das Bedienteil der Klimaanlage manuell weniger betätigen braucht, wodurch die Sicherheit im Verkehr verbessert wird.

Falls ein Benutzer manuelle Änderungen der automatischen Einstellungen vornimmt, so verändern Zeitpunkt und Art der Änderungen die bisherigen, automatischen Einstellungen. Dadurch wird die Klimaanlage an jeden Benutzer angepasst, so dass dieser weniger manuell korrigierend eingreifen muss.

Vorteilhafte Ausgestaltungen der Erfindung sind in den Unteransprüchen beschrieben. So können zusätzlich zum 24-stündigen Temperaturempfinden auch individuelle Langzeittemperaturverläufe wie wöchentliche, monatliche Perioden oder Jahreszeiten durch die Zeitinformation berücksichtigt werden. Falls die Insassen die zuvor gewünschte Innenraumtemperatur manuell verändern, so können diese Veränderungen dauerhaft gespeichert und bei späteren Einstellungen der Innenraumtemperatur berücksichtigt werden.

Ausführungsbeispiele der Erfindung werden im folgenden anhand der schematischen Zeichnungen näher erläutert. Es zeigen:
- Figur 1: einen Schnitt durch eine Klimaanlage,
- Figur 2: ein Blockschaltbild einer Innenraumtemperaturregelung einer erfindungsgemäßen Klimaanlage,
- Figuren 3 und 4: Zielregelkurven zum Regeln der Fahrzeuginnenraumtemperatur und
- Figur 5: eine Ansicht eines Bedienteils der Klimaanlage.

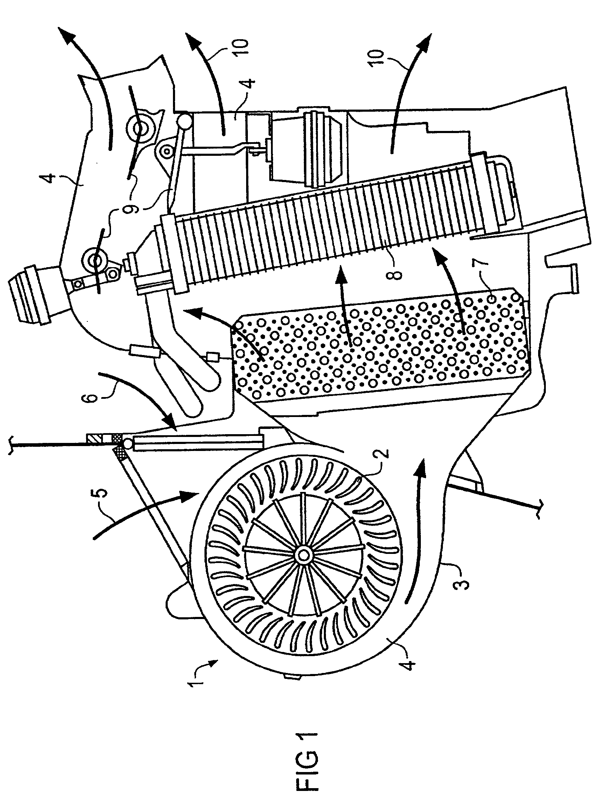

Klimaanlagen für Kraftfahrzeuge sind hinreichend bekannt und brauchen daher hier nicht näher erläutert zu werden. Sie weisen in der Regel ein Gebläse 1 (Figur 1) auf, das aus einem Lüfter 2 (bestehend aus Lüftermotor und Lüfterrad) und einem entsprechenden, für das Kraftfahrzeug ausgelegten Gehäuse 3 mit Lüftungskanälen 4 besteht. Das Gebläse 1 saugt über einen Frischlufteintritt Frischluft 5 (Luftströme sind durch Pfeile gekennzeichnet) oder über einen Umlufteintritt Umluft 6 an. Die angesaugte Luft wird durch den Lüfter 2 beschleunigt und über einen Verdampfer 7 (Kühlung) und/oder Heizkörper 8 (Heizung) und die Lüftungskanäle 4 temperiert in den Fahrzeuginnenraum 10 (oder auch als Fahrgastraum bezeichnet) geblasen. Über Belüftungsklappen 9 oder Luftverteilungsklappen (oder Lüftungsschächte) können verschiedene Bereiche innerhalb des Fahrzeugs unterschiedlich stark belüftet werden.

Je nach Drehzahl des Lüftermotors und konstruktiver Ausgestaltungen der Lüftungskanäle 4 mit den verschiedenen Klappen 9 wird eine unterschiedlich große Luftmenge mL mit einer vorgegebenen Temperatur in den Fahrgastraum geblasen. Der Innenraum 10 kann durch Erwärmen der Luft auf einen vorgegebenen Wert (Innenraumtemperatur T_{i soll}) und durch die Menge der einströmenden Luft mL auf eine gewünschte Innenraumtemperatur Tᵢ soll gebracht werden. Ebenso kann die Zeitdauer, bis zu der ein behagliches Innenklima herrscht, und die Geschwindigkeit der Temperaturänderungen über Lufttemperatur und Luftmenge m_{L} geregelt werden.

Die einzuströmende Luftmenge m_{L} kann einerseits über die Drehzahl des Gebläses 2 oder über die Stellung der Luftklappen 9 eingestellt werden. Die Temperatur des Luftstroms wird über den Verdampfer 7 (kühlen) oder den Heizkörper 8 (heizen) eingestellt.

Solche Klimaanlagen werden in der Regel von Mikroprozessoren 11 gesteuert, in denen Programme hinterlegt sind, durch die mit Hilfe eines Regelprofils (im folgenden als Zielregelkurve oder Regelalgorithmus bezeichnet) die Innenraumtemperatur Tᵢ geregelt werden soll.

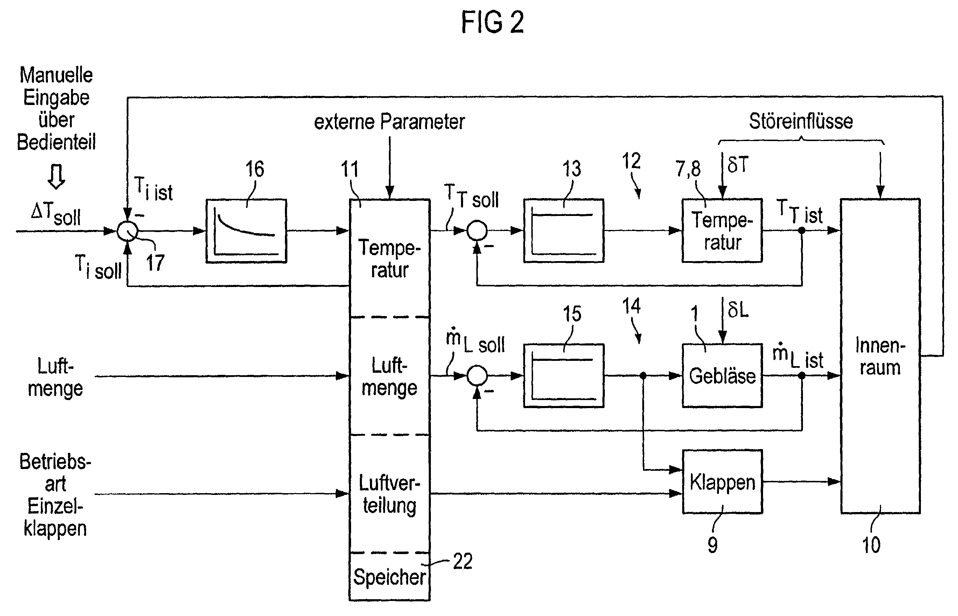

In der Figur 2 ist ein Temperaturregelkreis einer solchen Klimaanlage dargestellt. Mit Hilfe dieses Regelkreises wird die Innenraumtemperatur Tᵢ, die einzuströmende Luftmenge m_{L} und die Luftverteilung über die Klappen 9 geregelt. Die Innenraumtemperatur Tᵢ, die Luftmenge m_{L} und die Luftverteilung können durch externe Parameter beeinflusst werden. Solche externen Parameter sind beispielsweise Außentemperatur, Sonneneinstrahlung, Fahrgeschwindigkeit, Motordrehzahl, Luftfeuchtigkeit, Luftdruck, Stellung von Fenstern oder Zeitinformationen. Abhängig von einem oder mehreren Parametern wird dann die gewünschte Innenraumtemperatur T_{i soll} eingestellt.

Erfindungsgemäß werden einerseits Zeitinformationen dazu verwendet, die Innenraumtemperatur Tᵢ zu regeln. Dabei wird automatisch vorgegeben, wie die Innenraumtemperatur Tᵢ zu einem bestimmten Zeitpunkt eingeregelt werden soll. Falls andererseits ein Benutzer manuelle Änderungen (von Innenraumtemperatur Tᵢ, Gebläsestärke oder Luftverteilung) der automatischen Einstellungen vornimmt, so verändern Zeitpunkt und Art der Änderungen (z.B. ΔTₛₒₗₗ als Änderung der Einstellung der Innenraumtemperatur Tᵢ) die bisherigen, automatischen Einstellungen, und dies unabhängig davon, von welche Parametern die automatischen Einstellungen bestimmt sind. Dadurch wird die Klimaanlage an jeden Benutzer angepasst, so dass dieser weniger manuell korrigierend eingreifen muss.

Von einem Temperaturregelkreis 12 mit einem Regler 13 (üblicherweise ein P- oder PID-Regler) und dem Verdampfer 7 sowie Heizkörper 8 wird die von dem Programm des Mikroprozessors 11 vorgegebene Solltemperatur Tₛₒₗₗ geregelt und damit der in den Innenraum 10 strömende Luftstrom beaufschlagt. Analog wird in einem Luftmengenregler 14 die Luftmenge m_{L} über einen Regler 15 und dem Gebläse 2 geregelt, die von dem Programm des Mikroprozessors 11 vorgegeben wird. Die Klappen 9 können ebenfalls von dem Mikroprozessor 11, beispielsweise elektromotorisch gesteuert angesteuert werden. Dabei sind alle Einstellungen voneinander abhängig, um den Innenraum 10 gemäß einer Zielregelkurve innerhalb einer durch die Zielregelkurve vorgegebenen Zeit auf die Wunschtemperatur T_{i soll} zu bringen.

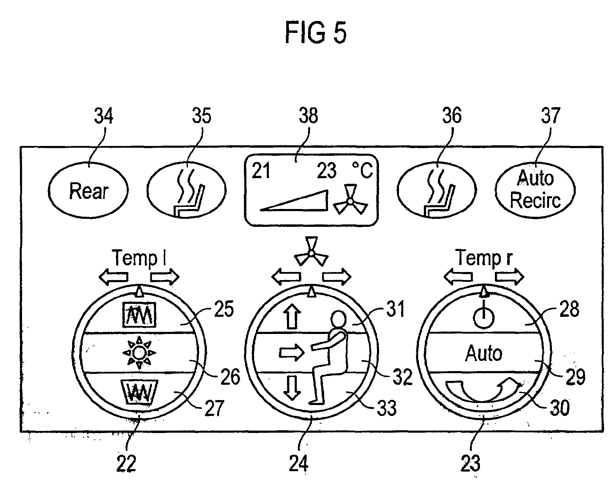

Die sich im Innenraum 10 einstellende Isttemperatur T_{i ist} kann gemessen oder errechnet werden. Sie wird als Regelgröße auf ein Additionsglied 17 zurückgeführt, auf das auch die Solltemperatur T_{i soll} vom Mikrocomputer 11 und manuelle Änderungen der Temperatur ΔTₛₒₗₗ durch manuelle Eingaben, die ein Benutzer über ein Bedienteil (wie es beispielsweise in der Figur 5 dargestellt ist und weiter unten noch genauer erläutert wird) gegebenenfalls bei Unbehaglichkeit vornimmt, zugeführt werden. Der Ausgang dieses Additionsgliedes 17 wird über einen Regler 16 dem Mikroprozessor 11 zugeführt, der dann seinerseits eine Sollvorgabe (Solltemperatur t_{T} soll) für den Temperaturregelkreis 12 macht.

Analog wird bei Änderungswünschen bezüglich Luftmenge und Luftverteilung verfahren. Ziel ist es, die Wunschtemperatur T_{i soll} so schnell einzustellen, dass es der Benutzer als angenehm empfindet. Die Sollvorgabe wird entsprechend der Zielregelkurve eingestellt. Auf diese Weise wird der Innenraum 10 auf die gewünschte Solltemperatur T_{i soll} (auch als Wunschtemperatur bezeichnet) gebracht.

Durch die Regelkreise werden Störeinflüsse, die die Temperatur im Innenraum 10 negativ beeinflussen Temperaturänderung δT), wie Sonneneinstrahlung, Außentemperatur, geöffnete Fenster, Luftfeuchtigkeit u.ä. kompensiert. Ebenso werden Störeinflüsse δL auf die Luftmenge m_{L}, wie geöffnete Fenster, weitgehend kompensiert.

In dem Programm des Mikroprozessors 11 sind Zielregelkurven hinterlegt oder werden dort mittels gespeicherter Daten jeweils erzeugt, anhand derer die Innenraumtemperatur Tᵢ auf die gewünschte Wunschtemperatur T_{i soll} gebracht werden.

Hierzu verwendet der Mikroprozessor 11 bei einem ersten Ausführungsbeispiel eine Zeitinformation, die er von einem externen oder internen (nicht dargestellten) Zeitgeber, wie einer Uhr mit Datumsangabe, erhält. Somit wird jedem aktuellen Zeitpunkt eine Zielregelkurve zugeordnet oder dazu berechnet.

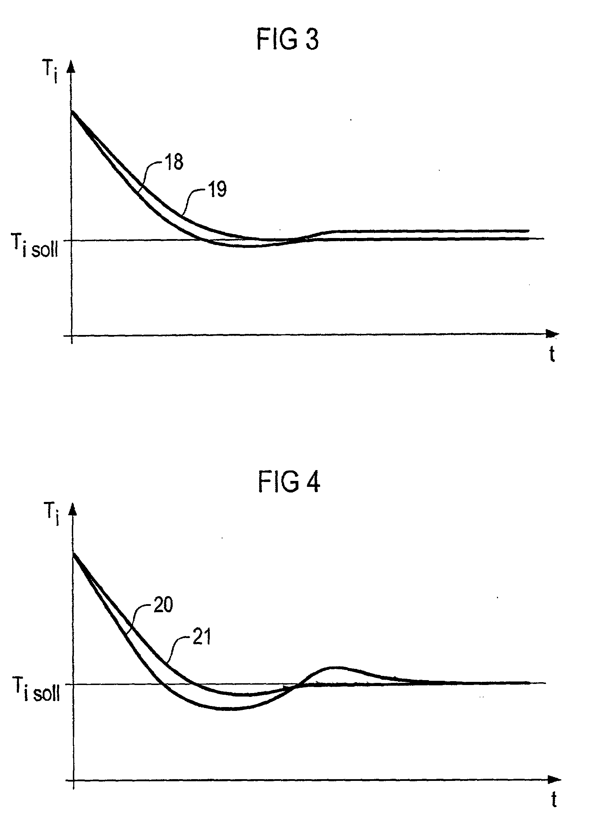

Bei dem vorliegenden Ausführungsbeispiel nach den Figuren 3 und 4 sind zwei Zielregelkurven 18 - 21 dargestellt, und zwar eine für den Tag und eine für die Nacht. Anhand der aktuellen Uhrzeit bestimmt der Mikroprozessor 11, welche der Zielregelkurven 18 - 21 zu verwenden ist, um die Innenraumtemperatur Tᵢ auf die Wunschtemperatur einzuregeln.

Die Zeitinformation erhält der Mikroprozessor 11 dabei von einer Uhr im Kraftfahrzeug, einer sonstigen Zeitbasis im Kraftfahrzeug oder über Zeitinformationen, die telemetrisch, beispielsweise über Internet, Funk oder GPS, dem Fahrzeug von außen zugeführt werden.

Da die Zeitinformationen sehr genau sind, kann nicht nur zwischen Tag und Nacht unterschieden werden, sondern für jede Stunde oder sogar rein theoretisch für jede Minute eine eigene Zielregelkurve erstellt werden.

Da die Körpertemperatur eines Menschen einem Tagesrhythmus unterliegt, unterliegen auch die Empfindungen der thermischen Behaglichkeit dem gleichen circadianen Rhythmus. Infolgedessen unterscheiden sich auch die Zielregelkurven je nach aktueller Zeit, damit die Innenraumtemperatur Tᵢ entsprechend eingestellt werden kann und immer ein thermisches Wohlbehagen gegeben ist. Infolgedessen braucht der Benutzer nur wenige manuelle Eingriffe in die Klimaregelung vornehmen.

Wenn es beispielsweise der Benutzer in den frühen Morgenstunden wärmer haben möchte, um ein thermisches Wohlbehagen zu haben, so wird die Zielregelkurve so ausgelegt, dass die Wunschtemperatur schneller erreicht wird und/oder die Temperatur um ein oder zwei Grad höher eingestellt wird wie am Nachmittag oder zu sonstigen Zeiten.

Zusätzlich zum 24-stündigen, circadianen Temperaturempfinden kann der Langzeittemperaturverlauf, z.B. wöchentliche oder monatliche Perioden im Steuerprogramm für die Zielregelkurven berücksichtigt werden. Anzunehmen ist nämlich, dass unterschiedliche Schlaf- und Ruhezeiten an Wochentagen oder an Wochenenden den 24-stündigen Empfindungsverlauf etwas verschieben. Die automatischen Einstellungen sind dabei von der aktuellen Zeit (Uhrzeit, Wochentag, Jahreszeit) abhängig, zu der die Klimaanlage benutzt wird.

Diese Zielregelkurven werden anfänglich nach einem Normbefinden eingestellt, das vorab bei einem oder mehreren Durchschnittsbenutzer ermittelt wurde. Dieses Normbefinden ist zunächst bei der Herstellung des Kraftfahrzeugs Grundlage für die automatischen Einstellungen. Wenn der Benutzer dann sein Kraftfahrzeug benutzt und die Klimaanlage einschaltet, so kann er bei thermischen Unbehagen Änderungen manuell vornehmen. Damit bringt er zum Ausdruck, dass er mit den aktuellen Einstellungen nicht zufrieden ist.

Die manuellen Änderungen werden sowohl in ihrer Art und Größe als auch bezüglich des zugehörige Zeitpunkts erfasst und gespeichert. So kann beispielsweise erfasst werden, wie schnell der Benutzer Änderungen vornimmt, nachdem er die Klimaanlage eingeschaltet hat. Ebenso kann die zugehörige Uhrzeit oder Datum erfasst werden, um die Klimaanlage beispielsweise an ein zeitlich abhängiges Temperaturempfinden anzupassen. Mit diesen Änderungen werden dann die Zielregelkurve für zukünftige Einstellungen verändert, wie es beispielsweise in der Figur 4 dargestellt ist.

Jede Person hat ihre eigene Zielregelkurve, die dann eingestellt wird, sobald diese Person das Fahrzeug besteigt. Damit der Klimaanlage mitgeteilt werden kann, welche Person zumindest im Kraftfahrzeug ist, muss sich diese Person identifizieren. Diese Identifizierung kann über die Benutzung des Kraftahrzeugschlüssels geschehen. Denn wenn jeder Person ein Kraftfahrzeugschlüssel zugeordnet ist, so wird bei Zugang zu dem Kraftfahrzeug erkannt, mit welchem Kraftfahrzeugschlüssel dies geschah. Dies wird dann der Klimaanlage mitgeteilt, die dann die personenindividuelle Einstellung mittels der Zielregelkurve als automatische Einstellungen vornimmt.

Die personelle Zuordnung kann auch über biometrische Mittel, wie Erfassen des Fingerabdrucks, Erfassen der Iris oder der Gesichtszüge mit Hilfe einer Kamera und durch Vergleich mit hinterlegten Mustern erfolgen. Hierzu ist es notwendig, dass jeder Person, die das Kraftfahrzeug benutzen darf, mit ihren Charakteristika oder die Zuordnung zu einem Schlüssel erfasst wird und dies im Kraftfahrzeug gespeichert wird. Dem Kraftfahrzeug kann auch telemetrisch mitgeteilt werden, welche Person das Kraftfahrzeug innerhalb einer vorgegebenen Zeit benutzen wird. Falls zu dieser Person schon automatische Einstellungen gespeichert sind, so werden diese dann für diese Person bei Benutzung der Klimaanlage aufgerufen und die Klimaregelung entsprechend vorgenommen.

Der Bedienteil der Klimaanlage kann beispielsweise einen Fingerabdrucksensor aufweisen. Sobald ein Insasse die Klimaanlage einschaltet, werden der Fingerabdruck genommen und die der Person zugeordneten Einstellungen vorgenommen. Somit kann die Innenraumtemperatur Tᵢ und das Regelverhalten der Klimaanlage auch an die Beifahrer angepasst werden. Derjenige Insasse, der Änderungen vornimmt wird dann automatisch mittels Fingerabdruck erfasst.

Sobald die Zuordnung erfolgt ist, wird die personenindividuelle Zielregelkurve angepasst. Voraussetzung dazu ist eine sogenannte lernende oder adaptive Klimaanlage, die entsprechende Speicher 22 und Recheneinheiten aufweist, durch die die Zielregelkurven entsprechend berechnet oder eingestellt werden können.

Bei Frauen beeinflusst der periodische Hormonverlauf ebenfalls das Temperaturempfinden. Wenn beispielsweise an einigen Tagen innerhalb des weiblichen Zyklus immer wieder die Wunschtemperatur T_{i soll} in bestimmter Weise verändert wird, so wird dies durch Erfassen der Änderungen und der damit korrelierten Zeit erkannt und entsprechend in der Zielregelkurve berücksichtigt. Somit kann die Klimaanlage bei Frauen dem Zyklus angepasst werden. Mit der Zeit ist die Klimaanlage dann auf diese Person eingestellt, so dass keine oder nur noch wenige Änderungen der Einstellungen notwendig werden.

Ebenso können jahreszeitliche Verläufe beim Temperaturempfinden berücksichtigt werden, indem im Winter nach einer anderer Zielregelkurve geregelt wird wie im Sommer. Oder im Frühjahr anders als im Winter, usw. Damit die Klimaanlage auch zum richtigen Zeitpunkt die entsprechende Zielregelkurve anwendet, muss ihr die Zeitinformation (Uhrzeit oder Datum) mitgeteilt werden. Zu einem konkreten Zeitpunkt des Benutzens der Klimaanlage kann dann die Zielregelkurve aus einem Speicher 22 abgerufen oder anhand von gespeicherten Daten errechnet werden und die Temperatur demgemäss geregelt werden.

In der Figur 3 sind die beiden Zielregelkurven für eine Person A bei Tag (Zielregelkurve 18) und bei Nacht (Zielregelkurve 19) dargestellt. Es sei angenommen, dass die Person A der Durchschnittsperson entspricht. Die Zielregelkurve 18, 19 stellt die zeitliche Abhängigkeit der Fahrzeuginnenraumtemperatur bis zum Erreichen der Wunschtemperatur T_{i soll} dar.

Die Zielregelkurven 20, 21 von Figur 4 könnten nun einer anderen Person B entsprechen, die beispielsweise eine um 1° C höhere Wunschtemperatur und eine um eine Stufe stärkere Gebläsestufe nach typischerweise 10 Minuten wünscht. Diesem häufig auftretenden Unterschied zwischen den Benutzern kann allein aufgrund der oben genannten personenindividuellen Zuordnung Rechnung getragen werden, wenn diese Benutzer auch Änderungen bezüglich des anfänglich eingestellten Normbefindens zwischenzeitlich vorgenommen haben.

Ebenso könnten die Zielregelkurven von Figur 4 der Person A zugeordnet sein, falls die ursprünglichen Einstellungen durch die Person A im Laufe der Zeit durch manuelle Korrekturen geändert wurden. Folglich können also Einstellungen am Bedienteil, indem diese besonderen Parameter mit der Person, dem Zeitverlauf oder den Umgebungsparametern korrigiert werden und schließlich in den nächsten Benutzungsintervallen des Kraftfahrzeugs eingearbeitet werden, vorgenommen werden, wodurch sich die Zielregelkurven ändern.

Den Zielregelkurven mit den Tages-, Wochen-, Monats- oder Jahresrhythmen können des weiteren individuell eingestellte Änderungen überlagert werden. Je nachdem wie schnell Änderungen der Zielregelkurve vorkommen werden, können dann die neuen Zielregelkurven entsprechend gewichtet verändert werden. So mag ein Benutzer beispielsweise nur einen langsamen Anstieg der Innenraumtemperatur Tᵢ. Wenn er also immer wieder das Gebläse eine Stufe kleiner stellt, so wird Zeitpunkt der Verstellung und Größe der Verstellung erfasst und dem Benutzer zugeordnet. Dies fließt dann entweder sofort oder allmählich in die automatischen Einstellungen für diesen Benutzer ein.

Um kurzzeitige Ausreißer im Temperaturempfinden zu vermeiden, werden mehrere Zielregelkurven über mehrere Benutzungen ermittelt. Die letzten Benutzungen können dabei mehr Gewicht finden als frühere Benutzungen, wodurch sich die Klimaanlage an Jahreszeit oder Alter des Benutzers mit der Zeit anpasst. Es kann auch anhand einer Historie, wie zeitlicher Verlauf zusammen mit der Richtung der Veränderungen, manuelle Veränderungen vorweggenommen werden, weil zu erwarten ist, dass es der Benutzer beispielsweise mit steigendem Alter immer wärmer haben möchte. Durch eine ständige, mit der Zeit (über Monate oder Jahre) vorgenommene automatische Erhöhungen der Wunschtemperatur wird diesem thermischen Empfinden Rechnung getragen. Auf diese Weise wird eine adaptive Regelung der Klimaanlage realisiert.

Selbst wenn keine manuellen Änderungen über das Bedienteil der Klimaanlage vorgenommen werden, so kann beispielsweise die Fahrweise ein Indiz dafür sein, dass das augenblickliche Temperaturempfinden vom üblichen Wert abweicht, da eine hektische Fahreigenschaft (erkennbar an hohen, stark schwankenden Geschwindigkeiten und gleichzeitigen häufigem Lenkeinschlag) eine stärkere Fahreraktivität und damit Eigenerwärmerzeugung vermuten lässt, falls der Benutzer die eingestellte Innentemperatur Tᵢ als zu hoch empfindet.

Die Bewegungsabläufe sind bei Kälte langsamer, da auch der Stoffwechsel eingeschränkt ist. Tätigkeit, d.h. körperliche Aktivität beeinflusst die körperliche Abwärme. Dies steht in thermischem Zusammenhang mit der Umgebungstemperatur. Falls sich der Fahrer thermisch unwohl fühlt, so kann anhand der körperlichen Aktivitäten die Klimaanlage mit seiner Wunschtemperatur automatisch an das Verhalten des Fahrers entsprechend angepasst werden. Diese Änderungen können auch dauerhaft für diesen Benutzer gespeichert und immer weiter, näher an das biologische verhalten angepasst werden.

Umgekehrt kann eine ausnahmsweise besonderes defensive Fahrweise auf eine zu kühle Temperatur und auf ein thermisches Unbehagen hindeuten. Über Motordrehzahl und Lenkeinschlagserfassung könnte dies erkannt und in der Klimaanlage entsprechend korrigiert werden. Ebenso könnte eine Kamera die Benutzer beobachten und bei verstärkter Bewegungstätigkeit (dies entspricht einer zu hohen, unangenehmen Temperatur) die Zielregelkurve entsprechend anpassen, damit die Wunschtemperatur etwas absinkt. Dies kann ebenfalls korreliert mit einer Zeit- und Benutzerinformation in den Speicher 22 abgelegt werden und immer wieder aktualisiert werden, wodurch die Zielregelkurve ständig angepasst wird.

Die körperliche Aktivität kann auch aus gemessenen Daten, die beispielsweise über die Diebstahlinnenraumüberwachung, einen Sitzsensor, eine Kameraüberwachung oder die Fahrweise ermittelt werden, abgeleitet werden. Somit kann das Verhalten des Fahrers und der Beifahrer entsprechende Berücksichtigung in der Regelung der Klimaanlage finden.

Die Zielregelkurven können für beliebig viele, dem Kraftfahrzeug zugeordneten Personen erstellt werden (falls auch ausreichend Speicherkapazität zur Verfügung steht). Zusätzlich zu den Parametern für die Zeit (Tages-, Wochen-, Monats- oder Jahresrhythmus) können zusätzlich weitere Parameter, wie Sonneneinstrahlung, gemessene Außen- oder Innenraumtemperatur, die Fahrweise, Luftfeuchtigkeit, Anzahl der Insassen, Alter, Luftbewegung, Luftdruck, Luftzusammensetzung, Luftelektrizität, optische oder akustische Einflüsse die Zielregelkurve und damit das Regelverhalten beeinflussen.

Die Klimaregelung beeinflusst sowohl die Heizung als auch die Kühlung. Es können auch damit verbundene Stellglieder wie Umluft, Gebläse, Sitze, Fenster usw. mitgesteuert werden.

In der Figur 5 ist ein Bedienteil zum manuellen Einstellen der Klimaanlage eines Kraftfahrzeugs beispielhaft dargestellt. Durch Betätigen einer oder mehrerer Schalter oder Bedienknöpfe kann der Benutzer die automatischen Einstellungen ändern. Die Änderungen können für eine spätere Benutzung der Klimaanlage gespeichert und berücksichtigt werden.

Das Bedienteil weist Temperaturregelknöpfe 22, 23 für die linke ("Temp 1") und für die rechte ("Temp r") Innenraumseite auf. Außerdem ist ein Regelknopf 24 zum Einstellen der Gebläsestärke vorhanden. Alle drei Knöpfe 22 - 24 weisen jeweils drei Schalter 25 - 37 auf, mit denen weitere Funktionen die Klimaanlage betreffend bedient werden.

So ist in dem Temperaturregelknopf 22 für die linke Seite ein Schalter 25 zum Einschalten der Heizwendel einer beheizbaren Heckscheibe, ein Schalter 26 zum Einschalten des Lüftungskanal für die Windschutzscheibe (abtauen, enteisen, defrost) und ein Schalter 27 zum Einschalten der Heizwendel einer beheizbaren Windschutzscheibe integriert.

In dem Temperaturregelknopf 23 für die rechte Seite ist ein Hauptschalter 28 zum Ein- oder Ausschalten der Klimaanlage, ein Schalter 29 zum Einschalten der Klimaautomatik und ein Schalter 30 zum Umschalten auf Umluft 6 integriert.

In dem Gebläseregelknopf 24 sind Schalter 31, 32, 33 zum Schalten der Luftverteilung für den Kopfbereich, den Körper/Mittelbereich bzw. den Fußbereich integriert.

Außerdem sind ein Schalter 34 zum Aktivieren des Bedienteils im Fondbereich, zwei Schalter 35, 36 zum Einschalten der Sitzheizung (für Fahrersitz bzw. Beifahrersitz) und ein Schalter 37 zum Aktivieren des Automatikbetriebs für die Umluft 6 (falls in der einströmenden Luft gemessene Schadstoffwerte eine Schwelle überschreiten wird auf Umluft 6 umgestellt) vorhanden.

Für den Benutzer befindet sich eine Anzeigeeinheit 38 in Form eines Displays gut sichtbar auf dem Bedienteil. Die Anzeigeinheit zeigt die aktuell eingestellten Wunschtemperaturen (möglicherweise getrennt für links und rechts) sowie die Gebläsestärke an.

Mit Hilfe des Bedienteils kann der Benutzer beispielsweise während des Automatikbetriebs der Klimaanlage die Wunschtemperatur mit den Temperaturregelknöpfen 22 und 23 verändern, falls er sich gleich zu Beginn oder später im stationären Zustand der Klimaanlage (d.h. nach de Zeit, nach der die Wunschtemperatur erreicht ist) immer noch thermisch unwohl fühlt. Die automatisch eingestellte Temperatur ist nicht gleich groß über die gesamte Zeit im Automatikbetrieb, sondern ist von der aktuellen Tages-, Wochen-, Monats- oder Jahreszeit abhängig. Somit ist die Temperatur an den Biorhythmus des Benutzers angepasst. Die Änderungen werden auch in ihrer Größe erfasst. Zusammen mit der Zeitinformation können sie zum Anpassen der bisherigen Einstellungen an die Änderungen verwendet werden.

Selbstverständlich sind auf der Bedieneinheit auch mehr oder weniger bedienbare Funktionen und damit Schalter möglich. Für die Erfindung kommt es nicht auf die Anzahl der Schalter und die damit verbundene Anzahl von Schalt-/Steuerungsfunktionen an, sondern auf das automatische Regeln der Innentemperatur Tᵢ von einem zusätzlichen Parameter, und zwar einer Zeitinformation. Außerdem kommt es auf das adaptive Regeln (Speichern von Einstellungen und Anpassen der vorherigen Werte an die Änderungen) der Innentemperatur Tᵢ nach manuellen Eingriffen des Benutzers in das Bedienteil an.

Erfindungsgemäß wird für jeden Benutzer das von der Zeit abhängende Profil (Zielregelkurve) gespeichert (oder aus gespeicherten Daten errechnet) und beim gleichen Benutzer bei der nächste Benutzung wieder abgerufen. Das Profil wird nach Verhalten oder Verändern durch den Benutzer ständig angepasst. Die Anpassung kann eine Ermittlung über die gesamte Vergangenheit oder auch eine Wichtung vorzugsweise der letzen Einstellungen sein. Je nachdem wie schnell und wie stark (im Bezug auf die bisherigen Einstellungen) die Einstellungen manuell vom Benutzer vorgenommen werden, kann dies die Wichtung beeinflussen. Die durch die Zeitinformation bedingte Zielregelkurven können den üblichen Regelkurven für die Klimaanlage überlagert sein, und dies sowohl im Automatikbetrieb als auch im manuell eingestellten Betrieb der Klimaanlage. Infolgedessen können externe und/oder interne Parameter (wie Außentemperatur oder Innentemperatur) das Profil ebenfalls verändern.

Selbstverständlich kann der Automatikbetrieb (Klimaautomatik) mit dem Schalter 29 auch abgeschaltet werden. Aber dann findet keine Regelung der Temperatur mehr statt. Die Luft wird dann mit der eingestellten Temperatur bei einer eingestellten Gebläsestärke in den Innenraum geblasen.

Die automatischen Einstellungen hängen üblicherweise zumindest von der Außentemperatur, der Innenraumtemperatur Tᵢ und/oder der Motordrehzahl ab. Erfindungsgemäß kommt - bei einem Ausführungsbeispiel - als zusätzlicher Parameter die Zeitinformation hinzu, durch die die automatischen Einstellungen zusätzlich verändert werden. Bei einem anderen Ausführungsbeispiel werden manuelle Eingriffe des Benutzers oder das Verhalten der Benutzer erfasst und damit die automatischen Einstellungen verändert, und dies unabhängig davon, ob als ein Parameter die Zeitinformation verwendet wird oder nicht.

## Patentansprüche

1. Verfahren zum Regeln einer Klimaanlage, durch die die Lufttemperatur (Tᵢ) eines Innenraums (10) eines Kraftfahrzeugs eingestellt wird, **dadurch gekennzeichnet, dass** die Lufttemperatur (Tᵢ) in dem Innenraum (10) abhängig von einer Zeitinformation geregelt wird.

2. Verfahren nach Anspruch 1, dadurch gekennzeichnet, dass die Zeitinformation eine aktuelle Tageszeit und/oder ein Wochentag und/oder eine aktuelles Datum ist.

3. Verfahren nach einem der vorhergehenden Ansprüche, dadurch gekennzeichnet, dass die Lufttemperatur (Tᵢ) in dem Innenraum (10) abhängig vom Zeitpunkt oder von der Größe von individuellen Verstellungen (ΔTₛₒₗₗ) des Benutzers geregelt wird.

4. Verfahren nach Anspruch 3, dadurch gekennzeichnet, dass die Verstellungen (ΔTₛₒₗₗ) gespeichert werden und danach bei demselben Benutzer zum Regeln der Lufttemperatur in dem Innenraum (10) abgerufen werden.

5. Verfahren nach einem der vorhergehenden Ansprüche, dadurch gekennzeichnet, dass die Lufttemperatur (Tᵢ) in dem Innenraum (10) abhängig von externen und/oder internen, physikalischen Parametern geregelt wird.

6. Klimaanlage für ein Kraftfahrzeug mit einem Gebläse (2) zum Zuführen einer Luftmenge (m_{L}) in den Innenraum (10), einem Temperaturregler (12), der die Temperatur der Luftströmung einstellt und mit einem Zeitmesser, der abhängig von einer Zeitinformation die Lufttemperatur (Tᵢ) in dem Innenraum (10) regelt.

7. Klimaanlage nach Anspruch 6, dadurch gekennzeichnet, dass sie einen Speicher (22) aufweist, in dem manuelle Änderungen des Benutzers und Daten zum Benutzer auf Dauer gespeichert werden.

8. Verfahren zum Regeln einer Klimaanlage dadurch gekennzeichnet, dass automatische Einstellungen der Klimaanlage die Innenraumtemperatur (Tᵢ) regeln und dass Zeitpunkt und Art von manuellen Änderungen der Einstellungen (ΔTₛₒₗₗ), die von einem Benutzer manuell getätigt werden, oder durch Verhalten des Benutzers bedingt sind, die bisherigen, automatische Einstellungen der Klimaanlage verändern.

9. Verfahren nach Anspruch 8, dadurch gekennzeichnet, dass mehrere manuelle Einstellungen (ΔTₛₒₗₗ) gewichtet gemittelt werden, um Veränderungen der automatischen Einstellungen vorzunehmen.
